# EUROPEAN PATENT APPLICATION

(11) **EP 2 423 907 A1**
(43) Date of publication of application: **29.02.2012**
(21) Application number: 11178922.8
(22) Date of filing: 25.08.2011
(51) Int. Cl.: G09F 13/18, G09F 19/22, G02B 6/00

(54) **Signaling apparatus for luminaires**

(30) Priority: 30.08.2010 IT BO20100527
(71) Applicant: Schneider Electric Industrie Italia S.p.A., 02010 Vazia (Rieti) (IT)
(72) Inventor: Govoni, Morgan, 40066 Pieve Di Cento Bo (IT)
(74) Representative: Modiano, Micaela Nadia

(57) **Abstract**

A signaling apparatus for luminaires (2), constituted by a casing (3) which can be associated with the installation surface, an at least partially transparent screen (4) which can be detachably associated with the casing (3) so as to form an internal compartment, and at least one light source, which is arranged inside the compartment and is connected to a respective power supply circuit.

The apparatus (1) comprises at least one locking insert (5), which can be associated stably with the screen (4) in a plurality of contiguous configurations, at least one abutment element, which is also jointly connected to the screen (4), and a signaling panel (6), which comprises two substantially angular opposite edges (7) adapted to engage stably on the insert (5) and on the abutment element for the stable locking of the panel (6) in a configuration which is substantially perpendicular to the surface (8) of the screen (4) that is adjacent thereto.

## Description

The present invention relates to a signaling apparatus for luminaires.

In many types of luminaire it is known to use signaling panels provided by means of plates of various materials which are generally transparent.

A transparent plate that protrudes with respect to the screen of the luminaire (in a substantially radial direction with respect to the installation position on said screen) in fact conveys part of the light beam and therefore renders the signs (decals, screen printing, paints and the like) provided on the exposed surfaces of said panel more evident.

Currently, most known methods for fixing signaling panels to luminaires (particularly for emergency lamps) require assembly by opening of the appliance by means of screws or other mechanical coupling assemblies. These solutions do not ensure the degree of protection against the penetration of foreign objects and water (this degree of protection is defined by means of an IP code, IP being the acronym of International Protection, followed by a first numeral that defines the level of protection against contact with external solid objects and against access to dangerous parts and by a second numeral that defines the level of protection against the penetration of liquids). In particular, for many luminaires an IP 65 degree of protection (i.e., fully protected against dust and protected against jets of water) is required: losing this level of protection compromises the possibility of using the luminaire in various installations.

Secondarily, the methods for fixing panels of the known type slow the operations for replacing and maintaining the accessory.

The few constructive solutions that make it possible to preserve the degree of initial protection of luminaires require a large number of components that are difficult and complicated to assemble.

Accordingly, the operations for maintenance of this type of luminaire provided with signaling panels are particularly onerous.

The aim of the present invention is to solve the problems described above, proposing a signaling apparatus for luminaires that is adapted to leave the degree of protection against the penetration of solids and liquids of the luminaire on which it is installed unchanged.

Within the scope of this aim, an object of the invention is to propose a signaling apparatus for luminaires that is simple to install, replace and maintain.

Another object of the invention is to propose a signaling apparatus for luminaires that is constituted by a reduced number of components for reducing assembly, installation and storage costs.

Another object of the invention is to propose a signaling apparatus for luminaires that is highly versatile and suitable for accommodating panels of various sizes.

A further object of the present invention is to provide a signaling apparatus for luminaires that is low-cost, relatively simple to provide in practice and safe in application.

This aim and these objects are achieved by a signaling apparatus for luminaires, constituted by a casing which can be associated with the installation surface, an at least partially transparent screen which can be detachably associated with said casing so as to form an internal compartment, and at least one light source, which is arranged inside said compartment and is connected to a respective power supply circuit, characterized in that it comprises at least one locking insert, which can be associated stably with said screen in a plurality of contiguous configurations, at least one abutment element, which is also jointly connected to said screen, and a signaling panel, which comprises two substantially angular opposite edges adapted to engage stably on said insert and on said abutment element for the stable locking of said panel in a configuration which is substantially perpendicular to the surface of said screen that is adjacent thereto.

Further characteristics and advantages of the invention will become more apparent from the description of a preferred but not exclusive embodiment of the signaling apparatus for luminaires according to the invention, illustrated by way of non-limiting example in the accompanying drawings, wherein:

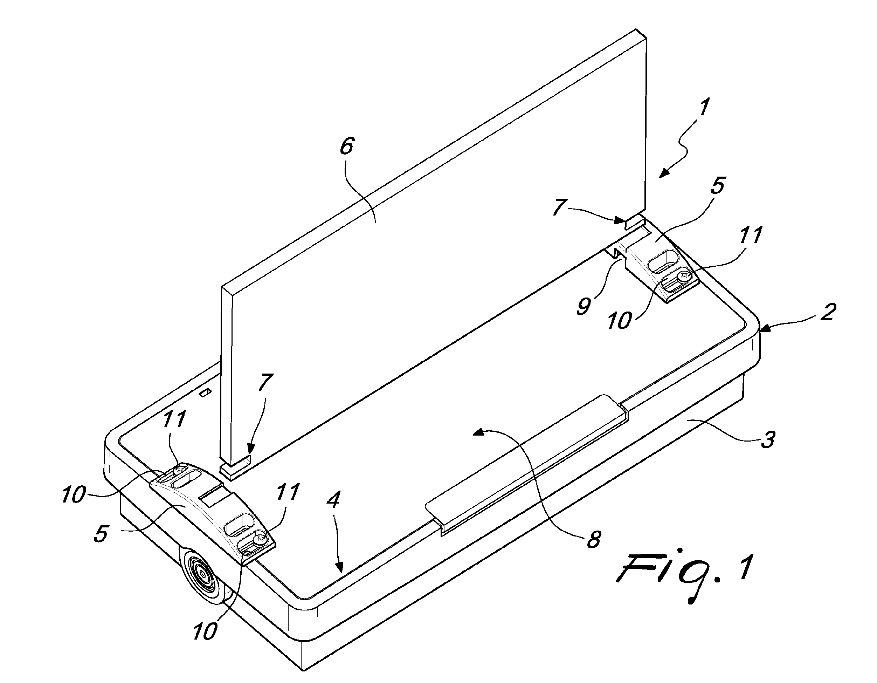

Figure 1 is an exploded perspective view of a signaling apparatus according to the invention, arranged in the configuration for mounting on a respective luminaire;

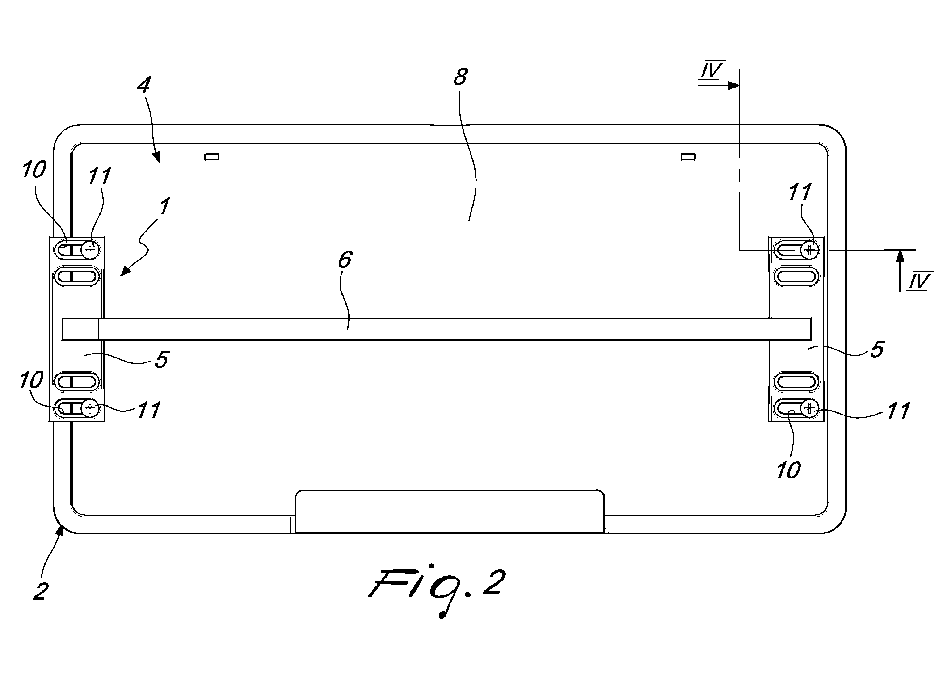

Figure 2 is an exploded bottom view of a signaling apparatus according to the invention, arranged in the configuration for mounting on a respective luminaire;

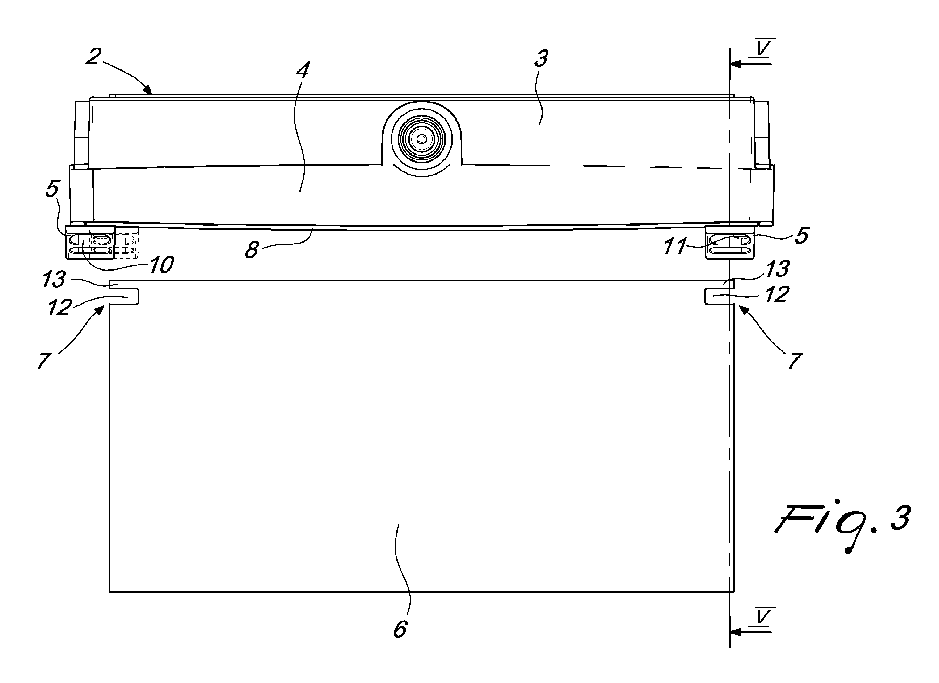

Figure 3 is an exploded side view of a signaling apparatus according to the invention, arranged in the configuration for mounting on a respective luminaire;

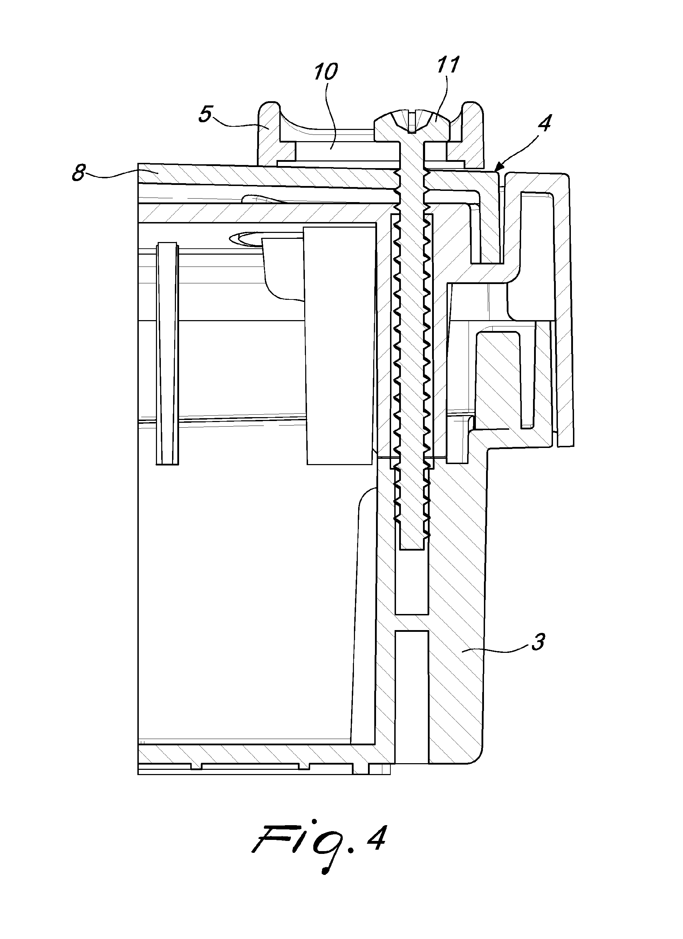

Figure 4 is a sectional view, taken along the plane IV-IV of Figure 2;

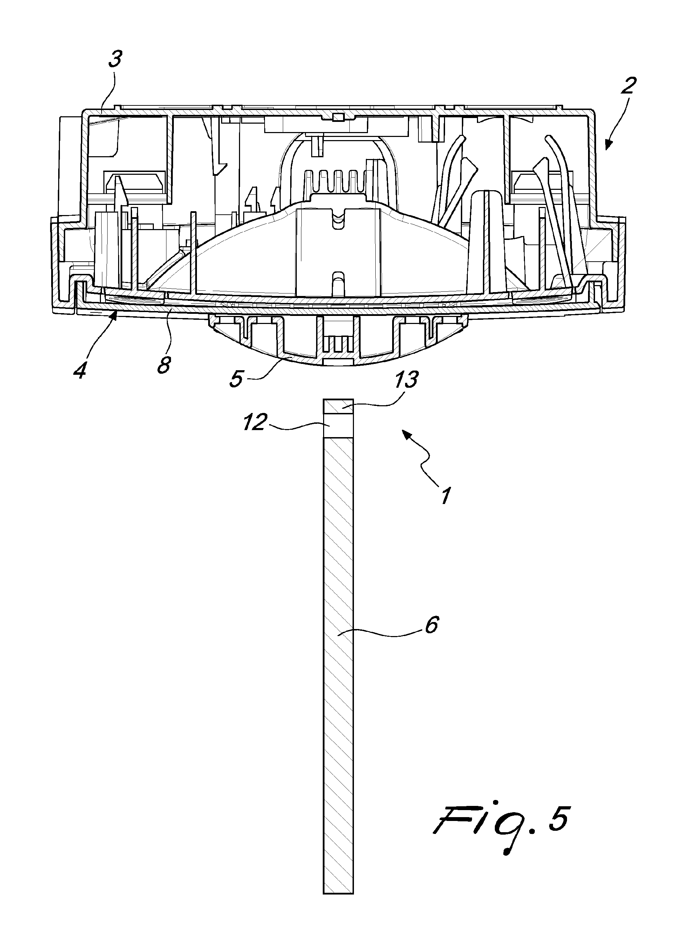

Figure 5 is a sectional view, taken along the plane V-V of Figure 3;

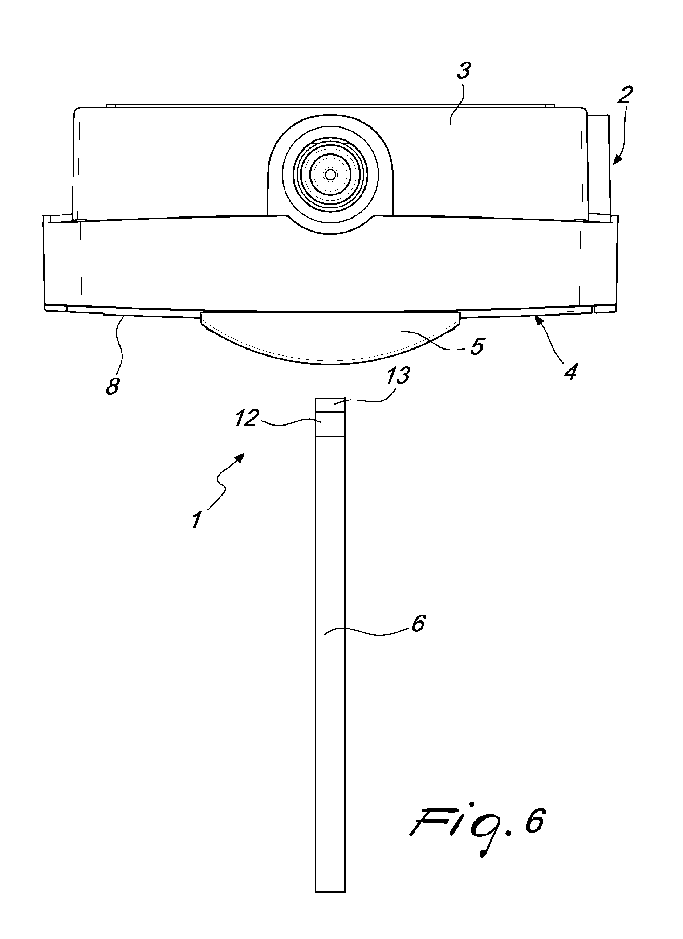

Figure 6 is an exploded front view of a signaling apparatus according to the invention arranged in the configuration for mounting on a respective luminaire;

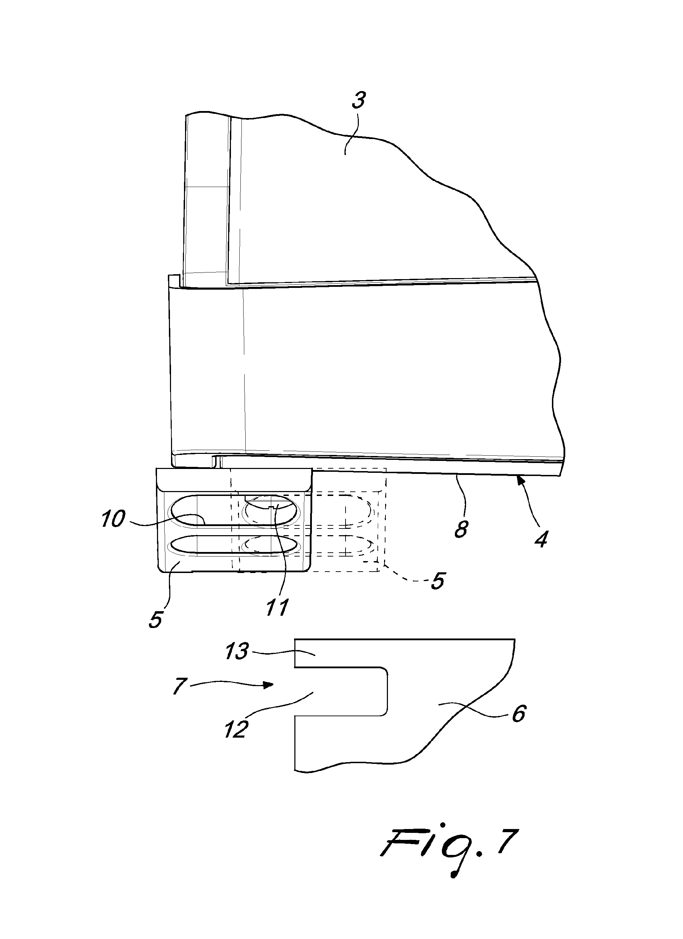

Figure 7 is an enlarged-scale view of a detail of Figure 3.

With particular reference to the figures cited above, the reference numeral 1 generally designates a signaling apparatus for luminaires 2.

The luminaires 2 are constituted by a casing 3, which can be associated with the installation surface, and a screen 4, which is at least partially transparent.

The screen 4 can be coupled detachably to the casing 3, defining and internal compartment that is suitable to contain at least one light source (not visible in the figure) which is connected to a respective power supply circuit.

The apparatus 1 comprises at least one locking insert 5, which can be associated stably with the screen 4 in a plurality of contiguous configurations, and at least one abutment element, which is also integral with the screen 4.

The apparatus 1 furthermore comprises a signaling panel 6, which comprises two substantially angular opposite edges 7 adapted to engage stably the insert 5 and the abutment element so as to lock the panel 6 stably in a configuration that is substantially perpendicular to the surface 8 of the screen 4 contiguous thereto.

According to a particular constructive solution of unquestionable interest in practice and in application, the locking insert 5 comprises at least one fixing seat, which can slide at least partially with respect to at least one respective coupling unit, which is integral with the screen 4 and comprises at least one cavity 9 whose shape and dimensions are substantially complementary to those of the respective angular edge 7 of the panel 6.

The cavity 9 is designed to accommodate a respective edge 7.

It should be noted conveniently that the abutment element, in a particularly efficient and functional constructive solution, also is constituted by a second locking insert 5, which faces the first insert 5 and whose cavity 9 is directed toward the cavity 9 of the first insert 5.

Each cavity 9 is conveniently preset to accommodate a respective angular edge 7 of the signaling panel 6.

In a possible practical embodiment of the insert 5, the at least one fixing seat is constituted by a slot 10, which has the same orientation that the panel 6 assumes when it is in the assembly configuration.

In this case, the respective coupling unit can be constituted effectively by a screw 11: in this case, the screen 4 is provided with respective seats (which are substantially cylindrical) adapted to accommodate the screws 11. Said seats can be already threaded with the same pitch as the screws or can have a diameter that is slightly smaller than the diameter of the crests of the threads of the screws 11, so that the tightening of said screws 11 creates a female thread within which said screws engage.

The use of the same holes that normally would be engaged by the screws required to anchor the screen 4 to the casing 3 to engage the screws 11 is not excluded.

The tightening of the screw 11 on the screen 4 clamps the frame for delimiting the slot 10, consequently locking the insert 5 on the screen 4.

For ensuring that the sliding of each insert 5 occurs exclusively in one direction (the direction that is parallel to the longitudinal direction of the panel 6) the slots 10 are two, arranged at the lateral tabs of the insert 5 and parallel to each other; each slot 5, in this case, accommodates a respective locking screw 11.

It is important to point out that the mutually opposite angular edges 7 of the panel 6 comprise at least one respective perimetric notch 12, which is parallel to the screen 8.

The notch 12 defines an end tooth 13, which protrudes with respect to the angular edge 7 and is suitable to be accommodated within a respective cavity 9 of a respective locking insert 5.

The two mutually opposite angular edges 7, according to a constructive solution of unquestionable interest in practice and in application, have end teeth 13 which are accommodated stably within cavities 9 of respective inserts 5 coupled stably to the screen 4; the mutual approach of the inserts, with the sliding of the screws 11 within the respective slots 10, determines the clamping of the panel 6 to the screen 4.

It is noted that the panel 6 can be at least partially transparent so as to convey a beam of light through its edge that faces the screen 4 and is proximate to it, with consequent increase of the visibility of the panel 6: said light in fact is partially diffused through the lateral faces of the panel 6 that bear the indications and messages for users. The light that diffuses through said faces therefore increases the visibility of the panel 6 (and therefore of the indications and messages for users).

What is particularly interesting in the apparatus 1 according to the invention is the fact that it can be mounted on a luminaire 2 without modifying in any way its degree of protection with respect to the penetration of liquids and solids (IP degree of protection) and that it can be mounted and removed without the necessity of removing any component of the luminaire 2.

The mounting of the apparatus 1 provides for the alignment of the at least one slot 10 of at least one insert 5 with a respective hole provided in the screen 4.

At this point it is possible to insert a screw 11 in each hole, making it pass through the respective slot 10.

It is then necessary to align each angular edge 7, provided with at least one respective notch 12 and at least one respective end tooth 13, of the panel 6 with a corresponding cavity 9 of an insert 5.

Having achieved the necessary alignment, it is necessary to move the inserts 5 mutually closer along the direction identified by the respective slots 10, fastening the panel 6 between them with consequent full insertion of the teeth 13 in the respective cavities 9.

The locking of the resulting structure is ensured by the screwing of the screws 11 until the inserts 5 are fully locked on the screen 4, with consequent fixing of the panel 6 on said screen 4.

The apparatus 1 according to the invention thus provides for the adoption of inserts 5 that behave as sliders, by means of which it is possible to engage/disengage the panel 6 by means of a sliding engagement/disengagement movement. This apparatus 1 ensures that the IP degree of protection of the luminaire 2 is maintained, furthermore facilitating replacement/maintenance operations.

The great versatility of the components used makes it possible to apply them to any type of luminaire 2 (as long as it is possible to provide the holes within which the screws 11 are to engage): this demonstrates high versatility of the apparatus 1, which determines a lower cost for storage and inventory of said components (they are very few components of a universal type suitable for any application).

The constructive solution according to the invention has led to the development of an apparatus 1 that could lead to cost reductions on the final product and to a shorter installation time.

It is pointed out that the apparatus 1 according to the invention uses a panel 6 whose engagement/disengagement does not require opening the luminaire 2.

Advantageously, the present invention solves the problems described above, proposing a signaling apparatus 1 for luminaires 2 that is adapted to leave unchanged the degree of protection against the penetration of solids and liquids of the luminaire 2 on which it is installed.

Conveniently, the present invention proposes a signaling apparatus 1 for luminaires 2 that is simple to install, replace and maintain.

Positively, the signaling apparatus 1 for luminaires 2 is constituted by a reduced number of components for reducing assembly, installation and storage costs.

It is not secondary to point out that the signaling apparatus 1 for luminaires 2 according to the invention is highly versatile and is suitable to accommodate panels 6 of various sizes.

The invention thus conceived is susceptible of numerous modifications and variations, all of which are within the scope of the inventive concept; all the details may furthermore be replaced with other technically equivalent elements.

In the examples of embodiment shown, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

In practice, the materials used, as well as the dimensions, may be any according to the requirements and the state of the art.

The disclosures in Italian Patent Application No. BO2010A000527 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A signaling apparatus for luminaires (2), constituted by a casing (3) which can be associated with the installation surface, an at least partially transparent screen (4) which can be detachably associated with said casing (3) so as to form an internal compartment, and at least one light source, which is arranged inside said compartment and is connected to a respective power supply circuit, **characterized in that** it comprises at least one locking insert (5), which can be associated stably with said screen (4) in a plurality of contiguous configurations, at least one abutment element, which is also jointly connected to said screen (4), and a signaling panel (6), which comprises two substantially angular opposite edges (7) adapted to engage stably on said insert (5) and on said abutment element for the stable locking of said panel (6) in a configuration which is substantially perpendicular to the surface (8) of said screen (4) that is adjacent thereto.

2. The signaling apparatus according to claim 1, **characterized in that** said locking insert (5) comprises at least one fixing seat, which can slide at least partially with respect to at least one respective coupling unit, which is jointly connected to said screen (4), and comprises at least one cavity (9), whose shape and dimensions are substantially complementary to those of the respective angular edge (7) of said panel (6), for accommodating said edge (7).

3. The signaling apparatus according to claims 1 and 2, **characterized in that** said abutment element is also constituted by a second locking insert (5), which faces the first insert (5) and whose cavity (9) is directed toward the cavity (9) of the first insert (5), each cavity (9) being designed to accommodate a respective angular edge (7) of said signaling panel (6).

4. The signaling apparatus according to claims 1 and 2, **characterized in that** said at least one fixing seat is a slot (10), which has the same direction as said panel (10) when it is in the assembly configuration, and said at least one respective coupling unit is a screw (11), the tightening of said screw (11) on the screen (4) producing the clamping of the frame that delimits said slot (10), with consequent locking of said insert (5) on said screen (4).

5. The signaling apparatus according to claim 4, **characterized in that** said slots (10) are two, are arranged at the lateral tabs of said insert (5) and are mutually parallel, each slot (10) accommodating a respective fastening screw (11).

6. The signaling apparatus according to claims 1 and 2, **characterized in that** said opposite angular edges (7) of said panel (6) comprise at least one respective perimetric notch (12), which is parallel to the screen (4), said notch (12) forming a protruding end tooth (13) of said angular edge (7), which is adapted for accommodation within a respective cavity (9) of a respective locking insert (5).

7. The signaling apparatus according to one or more of the preceding claims, **characterized in that** said two mutually opposite angular edges (7) have end teeth (13) accommodated stably within cavities (9) of respective inserts (5) which are coupled stably to said screen (4), the mutual approach of said cards (5), with sliding of said screws (11) within the respective slots (10), causing the clamping of said panel (6) on said screen (4).

8. The signaling apparatus according to one or more of the preceding claims, **characterized in that** said panel (6) is at least partially transparent so that it can convey a beam of light through the edge thereof that faces said screen (4) and is proximate thereto, with consequent increase in the visibility of said panel (6).

9. A method for assembling a signaling apparatus (1), particularly comprising a panel (6), for luminaires (2) constituted by a casing (3) that can be associated with the installation surface, a screen (4), which is at least partially transparent and can be detachably associated with said casing (3) so as to form an internal compartment, and at least one light source, which is arranged inside said compartment and is connected to a respective power supply circuit, which consists in
- aligning the at least one slot (10) of at least one locking insert (5) with a respective hole provided in said screen (4);
- inserting a screw (11) in each hole, making it pass through said slot (10);
- aligning each angular edge (7), provided with at least one respective notch (12) and at least one respective end tooth (13), of said panel (6) with a corresponding cavity (9) of an insert (5);
- moving the inserts (5) mutually closer, along the direction identified by the respective slots (10), fastening said panel (6), with consequent full insertion of said teeth (13) in the respective cavities (9);
- tightening said screws (11) until said inserts (5) are locked completely on said screen (4), with consequent fixing of said panel (6) on said screen (4).
